# FASCICULE DE BREVET EUROPEEN

(11) **EP 3 414 452 B1**
(45) Date de publication et mention de la délivrance du brevet: **15.04.2020**
(21) Numéro de dépôt: 17701930.4
(22) Date de dépôt: 16.01.2017
(51) Int. Cl.: F03D 9/46, F03D 3/00, F03D 3/02, F03D 3/04, F03D 3/06, F03B 17/06

(54) **ÉOLIENNE/HYDROLIENNE MULTIFONCTIONNELLE ET LEUR RASSEMBLEMENT POUR DE MULTIPLES APPLICATIONS ET UTILISATIONS**
WIND-/WASSERMULTIFUNKTIONSTURBINE UND ANORDNUNG DAVON FÜR MEHRERE ANWENDUNGEN SOWIE VERWENDUNGEN
MULTIFUNCTIONAL WIND/WATER TURBINE AND ASSEMBLY THEREOF FOR MULTIPLE APPLICATIONS AND USES

(30) Priorité: 10.02.2016 FR 1600226
(43) Date de publication de la demande: 19.12.2018
(73) Titulaire: TECHSAFE GLOBAL, 75008 Paris (FR)
(72) Inventeur: VU, Tuan Nghiem, 94400 Vitry sur Seine (FR)
(86) Numéro de dépôt international: PCT/IB2017/050218
(87) Numéro de publication internationale: WO 2017/137858

(56) Documents cités:
- WO-A1-03/044362
- US-A- 574 290
- US-A1- 2010 252 088
- US-A1- 2012 119 504
- US-A1- 2012 121 396
- US-A1- 2014 023 500
- US-A1- 2016 010 620

## Description

Les vents, les cours d'eau, les courants marins ou fluviaux, les vagues et les marrées sont bien connus comme des sources d'énergies renouvelables et durables les plus répandues au monde. Donc, le développement des éoliennes et des hydroliennes sont en plein essor actuellement.
La présente invention concerne un dispositif qui transforme en énergie mécanique et en énergie électrique, l'énergie engendrée par les flux des fluides, tels que les flux d'air ou le vent pour la version éolienne, ou les flux hydrauliques comme les cours d'eau, les fleuves, les rivières, les courants marins ou fluviaux, les vagues et les marées pour la version hydrolienne. Les hydroliennes seront immergées dans l'eau.

Malgré de nombreux avantages des éoliennes à l'axe vertical ou des éoliennes verticales, les éoliennes à l'axe horizontal ou les éoliennes horizontales sont actuellement les plus utilisées et connues grâce à leur meilleure efficacité. Néanmoins, les éoliennes horizontales présentent aussi de nombreux inconvénients, comme les nuisances sonores, les impacts visuels, les dangers liés aux risques de la chute de la structure, des collisions avec les objets volants, les besoins de l'espace et les besoins du vent lamellaire, etc. Les éoliennes horizontales nécessitent des environnements dégagés. Cela réduit le rendement d'utilisation des terrains dans un parc des éoliennes horizontales. Les éoliennes horizontales ne sont pas très adaptées en ville, en espace confiné et en couloir de la migration des oiseaux.

Les éoliennes verticales classiques de type Savonius et Darrieus présentent plusieurs points forts, comme elles sont peu encombrantes, silencieuses, utilisables un peu partout pour tous types de vent, présentent peu d'impact environnemental et la possibilité de démarrage à faible vitesse de vent, etc. Les problèmes majeurs qui empêchent le développement les éoliennes verticales concernent principalement leur faible rendement, leur masse de structure importante et leur intégrité, car leur design n'est pas optimisé.
En effet, le vent a des effets négatifs sur l'aube retour des éoliennes verticales. Cela réduit significativement leur rendement.
D'autre part, les éoliennes horizontales et verticales ne peuvent actuellement pas fonctionner lorsque la vitesse de vent est trop faible ou trop forte pour des raisons techniques et de sécurité.

Une éolienne / hydrolienne est connue du document US 2014023500 A1.

Le dispositif de la présente invention permet de résoudre les problèmes de faible efficacité des éoliennes / hydroliennes verticales actuelles tout en renforçant leur sécurité et réduisant leurs impacts environnementaux.

La présente invention améliore le rendement ou l'efficacité des éoliennes et hydroliennes verticales en collectant plus de flux et en orientant les flux ayant des effets négatifs sur la rotation du rotor en flux ayant les effets positifs sur la rotation du rotor. D'autre part, la présente invention permet d'élargir les conditions opératoires des éoliennes / hydroliennes à une vitesse ou vélocité des flux plus faible et plus forte, donc elle permet d'augmenter la période de fonctionnement effectif des éoliennes / hydroliennes.

La présente invention permet d'alléger la force des flux sur la structure des éoliennes / hydroliennes, donc de réduire la masse des structures pour une même stabilité de l'installation. Elle propose aussi les modes de rassemblement des éoliennes / hydroliennes pour améliorer leur rendement et leur stabilité mécanique.

La version éolienne de la présente invention est conçue et optimisée pour adapter à tout environnement, où le vent peut être présent, en on-shore et offshore comme au bord des autoroutes, des routes, des réseaux ferrés, dans les tunnels, dans les champs, sur les collines, sur les immeubles, en toiture, sur les balcons, sur les terrasses ou au bord des rivières, au bord de la mer, dans les parcs d'éoliennes offshores à la mer, etc.

Installées au bord des routes, des autoroutes, etc. les installations des éoliennes de la présente invention fourniront de l'électricité pour l'éclairage et pour les stations ou des bornes de recharge des véhicules électriques le long des réseaux de transport. Cela sera très bénéfique dans des zones géographiques éloignées et isolées du réseau électrique global et pour les systèmes de recharge électrique sans contact le long des réseaux de transport. Ce type de recharge électrique sans contact pendant la circulation des véhicules le long des réseaux de transport permettra d'alléger le stockage d'énergie sur les véhicules, et donc de réduire le poids et la consommation d'énergie des véhicules. Cela diminuera les risques de feux, d'explosion et électriques liés aux systèmes de stockage d'énergie sur les véhicules.

La version hydrolienne de la présente invention peut être installée dans les cours d'eau, dans les rivières, dans les fleuves, dans les zones côtières, dans les zones de vidange et de remplissage des bassins ou dans les zones d'élevage aquatique, etc. où les courants d'eau et les vagues peuvent exister.

Les hydroliennes de la présente invention installées le long des rivières, des fleuves ou des cours d'eau permettront de fournir de l'électricité pour les stations de recharge des bateaux électriques classique et sans contact le long des cours d'eau dans le future. Les hydroliennes de la présente invention permettront aussi de substituer des barrages hydrauliques classiques dans les centrales hydroélectriques actuelles qui causent actuellement beaucoup d'impacts environnementaux. Les barrages hydrauliques perturbent des écosystèmes aquatiques et terrestres, ils empêchent la migration des poisons, ils causent des blocages des alluvions, des problèmes d'appauvrissement des cours d'eau en aval des rivières conduisant aux diminutions des espèces, du niveau d'eau, et de la fertilité des cours d'eaux tout en favorisant l'infiltration des eaux salées dans des zones côtières en aval. Les impacts environnementaux importants ont été constatés dans le monde. D'autre part, les barrages hydrauliques présentent des risques de rupture de barrage. Les géants barrages hydrauliques peuvent éventuellement générer une force significative sur les plaques tectoniques et causer des tremblements de terre dans les régions aux alentours. Les rangées des hydroliennes de la présente invention installées le long des rivières et des zones côtières joueront le rôle de murs anti-vagues et protégeront les digues contre les érosions causées par des courants d'eaux et des vagues. Donc, elles contribueront aussi à faire diminuer les risques de rupture des digues et de barrages.

La présente invention est illustrée par les 60 dessins présentés dans les 28 figures annexées suivantes:
- **Fig. 1** : La Fig. 1 représente une vue générale 3D d'une éolienne / hydrolienne verticale : Fig. 1a - Vue perspective globale; Fig. 1b - Vue générale sans structure protectrice extérieure ; Fig. 1c - Vue générale sans structure protectrice extérieure et sans caisson sommet.
   Où : 1 - Guidage de fluide (vent, courant d'eau...) ; 2 - Pales du rotor ; 3 - Axe de rotation du rotor ; 4 - Structure protectrice ; 5 - Caisson sommet ; 6 - Cadre structurant ; 7 - Caisson bas.
- **Fig. 2** : La Fig. 2 représente une éolienne / hydrolienne verticale vue de dessus en coupe avec les pales, les guidages de fluide (vent, courant d'eau...) plats, avec l'indication de rotation, en position de fonctionnement (Fig. 2a) et en position d'arrêt de sécurité (Fig. 2b).
   Où : 1 - Guidage de fluide (vent, courant d'eau...) ; 2 - Pales du rotor ; 3 - Axe de rotation du rotor ; 4 - Structure protectrice ; 6 - Cadre structurant ; 8 - Axe de rotation du guidage de fluide.
- **Fig. 3** : La Fig. 3 représente une éolienne / hydrolienne verticale vue de dessus en coupe avec les pales, les guidages de fluide (vent, courant d'eau...) courbés, avec l'indication de direction de rotation, en position de fonctionnement (Fig. 3a) et en position d'arrêt de sécurité (Fig. 3b).
   Où : 1 - Guidage de fluide (vent, courant d'eau...) ; 2 - Pales du rotor ; 3 - Axe de rotation du rotor ; 4 - Structure protectrice ; 6 - Cadre structurant ; 8 - Axe de rotation du guidage de fluide.
- **Fig. 4** : La Fig. 4 représente une éolienne / hydrolienne verticale à rotor trigonométrique vue de dessus en coupe avec les pales, les guidages de fluide (vent, courant d'eau...) plats avec l'indication des paramètres clés, en position de fonctionnement (Fig. 4a) et en position d'arrêt de sécurité (Fig. 4b).
   Où : D1 - Diamètre extérieur de l'éolienne / hydrolienne ; D2 - Diamètre du rotor ; D3 - Diamètre de l'espace de compensation de fluide ; α - Angle d'orientation des guidages de fluide.
- **Fig. 5** : La Fig. 5 représente une éolienne / hydrolienne verticale à rotor trigonométrique vue de dessus en coupe avec les pales, les guidages de fluide (vent, courant d'eau...) courbés, avec l'indication des paramètres clés, en position de fonctionnement (Fig. 5a) et en position d'arrêt de sécurité (Fig. 5b).
   Où : D1 - Diamètre extérieur de l'éolienne / hydrolienne ; D2 - Diamètre du rotor ; D3 - Diamètre de l'espace de compensation de fluide ; α - Angle d'orientation de guidages de fluide.
- **Fig. 6** **:** La Fig. 6 représente une éolienne / hydrolienne verticale à rotor anti-trigonométrique vue de dessus en coupe avec les pales, les guidages de fluide (vent, courant d'eau...) plats (Fig. 6a) ou courbés (Fig. 6b), avec l'indication des paramètres clés en position de fonctionnement.
   Où : D1 - Diamètre extérieur de l'éolienne / hydrolienne ; D2 - Diamètre du rotor ; D3 - Diamètre de l'espace de compensation de fluide ; α - Angle d'orientation de guidages de fluide.
- **Fig. 7** : La Fig. 7 représente une vue de dessus en coupe d'un guidage de fluide (vent, courant d'eau...) plat et régulier (Fig. 7a) ou renforcé (Fig. 7b).
   Où : 1 - Guidage de fluide (vent, courant d'eau...) ; 8 - Axe de rotation du guidage de fluide.
- **Fig. 8** : La Fig. 8 représente une vue de dessus en coupe d'un guidage de fluide (vent, courant d'eau...) courbé et régulier (Fig. 8a) ou renforcé (Fig. 8b).
   Où : 1 - Guidage de fluide (vent, courant d'eau...) ; 8 - Axe de rotation du guidage de fluide.
- **Fig. 9** : La Fig. 9 représente une illustration simplifiée de l'impact de fluide (vent, courant d'eau...) sur la structure de l'éolienne / hydrolienne : Fig. 9a - Guidages de fluide (vent, courant d'eau...) en position de fonctionnement; Fig. 9b - Guidages de fluide (vent, courant d'eau...) en position d'arrêt de sécurité ; Fig. 9c - Eolienne / hydrolienne sans des guidages de fluide (vent, courant d'eau...).
- **Fig. 10** : La Fig. 10 représente une éolienne / hydrolienne verticale vue de dessus en coupe avec les guidages de fluide (vent, courant d'eau...) plats à différent rapport D1/D2: Fig. 10a - Eolienne / hydrolienne à 12 guidages de fluide (vent, courant d'eau...) (D1/D2 = 1,2-1,6/1) ; Fig. 10b - Eolienne / hydrolienne à 8 guidages de fluide (vent, courant d'eau...) (D1/D2 = 1,6-1,9/1) ; Fig. 10c - Eolienne / hydrolienne à 6 guidages de fluide (vent, courant d'eau...) (D1/D2 = 1,9-3/1).
   Où : D1 - Diamètre extérieur de l'éolienne / hydrolienne ; D2 - Diamètre du rotor ; D3 - Diamètre de l'espace de compensation de fluide ; α - Angle d'orientation des guidages de fluide.
- **Fig. 11** : La Fig. 11 représente une éolienne / hydrolienne verticale vue de dessus en coupe équipée des guidages de fluide (vent, courant d'eau...) plats avec rotor trigonométrique à nombre de pales variable: Fig. 11a - Eolienne / hydrolienne avec rotor à 2 pales; Fig. 11b - Eolienne / hydrolienne avec rotor à 3 pales ; Fig. 11c - Eolienne / hydrolienne avec rotor à 4 pales.
- **Fig. 12** **:** La Fig. 12 représente l'architecture d'un rotor à trois pales vue de dessus en coupe: Fig. 12a - Rotor à trois pales avec les paramètres clés; Fig. 12b - Rotor à trois pales avec l'illustration de l'écoulement de flux et de la pression exercée sur les pales.
   Où : D2 - Diamètre du rotor ; D3 - Diamètre de l'espace de compensation de fluide ; a - Demi-grande axe ; b - Demi-petit axe.
- **Fig. 13** : La Fig. 13 représente une vue de dessus en coupe d'une éolienne / hydrolienne à rotor trigonométrique (Fig. 13a) et d'une éolienne / hydrolienne à rotor anti-trigonométrique (Fig. 13b).
- **Fig. 14** **:** La Fig. 14 représente un diagramme de circulation de fluide (vent, courant d'eau,...) sur des éoliennes / hydroliennes sans et avec des guidages de fluide (vent, courant d'eau...): Fig. 14a - Eolienne / hydrolienne sans guidages de fluide (vent, courant d'eau...); Fig. 14b - Eolienne / hydrolienne équipée avec guidages de fluide (vent, courant d'eau...).
- **Fig. 15** : La Fig. 15 représente un diagramme de circulation de fluide (vent, courant d'eau,...) sur une éolienne / hydrolienne isolée et sur un rassemblement de deux éoliennes / hydroliennes: Fig. 15a - Vue sur une éolienne / hydrolienne isolée; Fig. 15b - Vue sur un rassemblement de deux éoliennes / hydroliennes.
- **Fig. 16** : La Fig. 16 représente une vue schématique d'un rassemblement rectiligne des éoliennes / hydroliennes à différents designs de la structure protectrice. Fig. 16a - Structure protectrice individuelle en forme de cylindres individuels; Fig. 16b - Structure protectrice globale en forme de murs plats ; Fig. 16c - Structure protectrice individuelle en forme de tubes octogonaux.
- **Fig. 17** : La Fig. 17 représente une vue schématique d'un rassemblement en forme zigzag des éoliennes / hydroliennes. Fig. 17a - Structure protectrice individuelle en forme de cylindres individuels; Fig. 17b - Structure protectrice globale en forme de murs plats; Fig. 17c - Structure protectrice individuelle en forme de tubes octogonaux.
- **Fig. 18** : La Fig. 18 représente une vue schématique d'un rassemblement des éoliennes / hydroliennes en forme étoile ou Y. Fig. 18a - Rassemblement des éoliennes / hydroliennes à 12 guidages de fluide; Fig. 18b - Rassemblement des éoliennes / hydroliennes à 6 guidages de fluide.
- **Fig. 19** : La Fig. 19 représente une vue schématique d'un rassemblement des éoliennes / hydroliennes en forme d'une croix. Fig. 19a - Rassemblement des éoliennes / hydroliennes à 12 guidages de fluide; Fig. 19b - Rassemblement des éoliennes / hydroliennes à 8 guidages de fluide.
- **Fig. 20** : La Fig. 20 représente une vue schématique d'un rassemblement des éoliennes le long des réseaux de transport routiers et ferroviaires (des réseaux ferrés, des autoroutes, des routes, etc.) de circulation à sens unique.
- **Fig. 21** : La Fig. 21 représente une vue schématique d'un rassemblement des éoliennes le long des réseaux de transport routiers et ferroviaires (des réseaux ferrés, des autoroutes, des routes, etc.) de circulation à deux sens sans séparation des voies ou sans terre-plein central: Fig. 21a - Réseaux de transport de circulation à droit ; Fig. 21b - Réseaux de transport de circulation à gauche.
- **Fig. 22** : La Fig. 22 représente une vue schématique d'un rassemblement des éoliennes le long des réseaux de transport routiers et ferroviaires (des réseaux ferrés, des autoroutes, des routes, etc.) de circulation à deux sens avec séparation des voies ou avec le terre-plein central : Fig. 22a - Réseaux de transport de circulation à droit ; Fig. 22b - Réseaux de transport de circulation à gauche.
- **Fig. 23** : La Fig. 23 représente une illustration d'un ouvrage d'éolienne vue de côté en coupe installé dans l'espace de séparation des voies ou sur le terre-plein central des réseaux de transport routiers et ferroviaires (des réseaux ferrés, des autoroutes, des routes, etc.) (γ > 90°). Où : 4 - Structure protectrice ; 5 - Caiss on sommet ; 7 - Caisson bas ; 9 - Socle des éoliennes ; γ - angle entre la chaussée et la façade extérieure du socle des éoliennes.
- **Fig. 24** : La Fig. 24 représente une illustration des ouvrages des éoliennes installés au bord et sur le terre-plein central des réseaux de transport routiers et ferroviaires (routes, autoroutes, réseaux ferrés, etc.) jouant le rôle des murs anti-bruit et des barrières de sécurité.
- **Fig. 25** **:** La Fig. 25 représente une vue schématique d'un rassemblement des hydroliennes immergées dans l'eau le long des rivières, des fleuves, des cours d'eau, etc. : Fig. 25a - Configuration avec des hydroliennes installées en parallèle au bord de la rivière et sur la ligne de réduction de courant; Fig. 25b - Configuration avec des hydroliennes arrangées en parallèle au bord de la rivière seulement.
   Où : 10 - Bord de la rivière ; 11 - Murette de réduction de courant ; β - Angle de réduction de courant.
- **Fig. 26** **:** La Fig. 26 représente une vue schématique d'un rassemblement des hydroliennes submergées dans l'eau à chaque ouverture des zones d'élevage aquatique ou des zones maritimes.
- **Fig. 27** **:** La Fig. 27 représente une vue schématique d'un rassemblement des hydroliennes immergées dans l'eau à chaque ouverture des zones d'élevage aquatique installées dans les fleuves ou dans les rivières.
- **Fig. 28** : La Fig. 28 représente l'architecture de la structure protectrice : Fig. 28a - Maillage carré; Fig. 28b - Maillage losangé; Fig. 28c - Maillage hexagonal; Fig. 28d - Maillage triangulaire; Fig. 28e - Maillage rectangulaire.

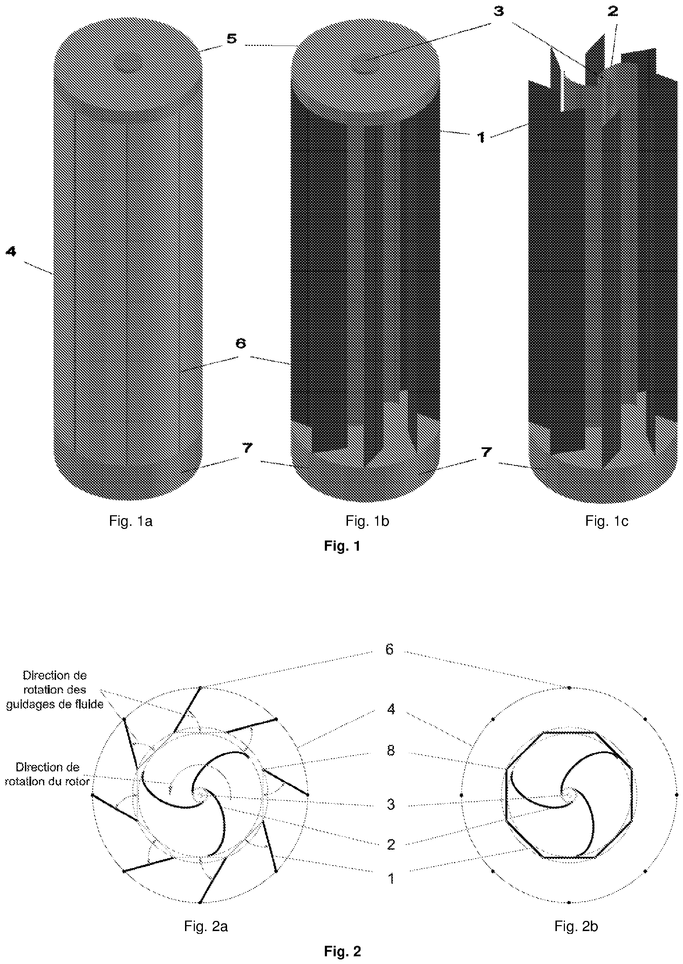

La Fig. 1 représente une vue générale d'une éolienne / hydrolienne verticale de la présente invention. Ladite éolienne / hydrolienne comprend des guidages de fluide (vent, courant d'eau, etc.) (**1)** qui s'étendent verticalement en parallèle à l'axe de rotation du rotor (**3**), des pales / aubes du rotor (**2**), une structure protectrice (**4**), un caisson sommet (**5**), un cadre structurant (**6**) et un caisson bas (**7**). Le caisson bas et le caisson sommet peuvent contenir un système de transmission mécanique, un multiplicateur, un générateur électrique, un système de freinage, un onduleur, des sorties électriques, un système de rotation des guidages de fluide, un système de control et de régulation, un système de sécurité, un système de refroidissement, un système de la technologie Maglev, un système de recharge électrique sans contact, un lot de batteries et un système de fixation, etc.

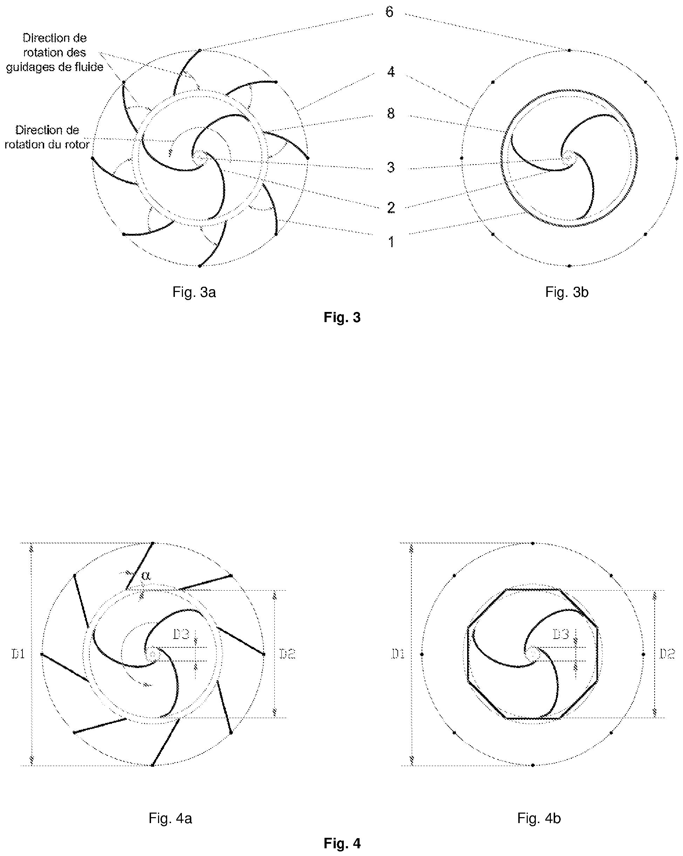

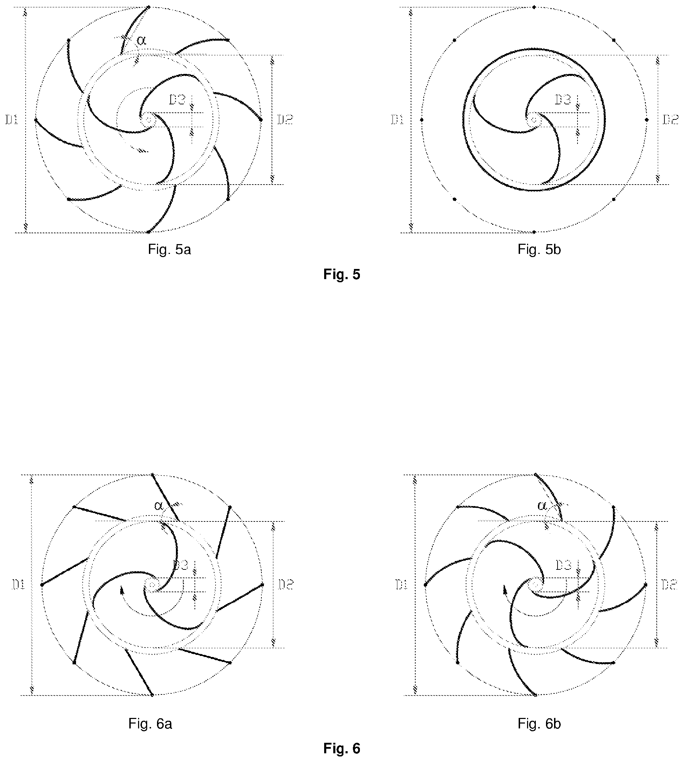

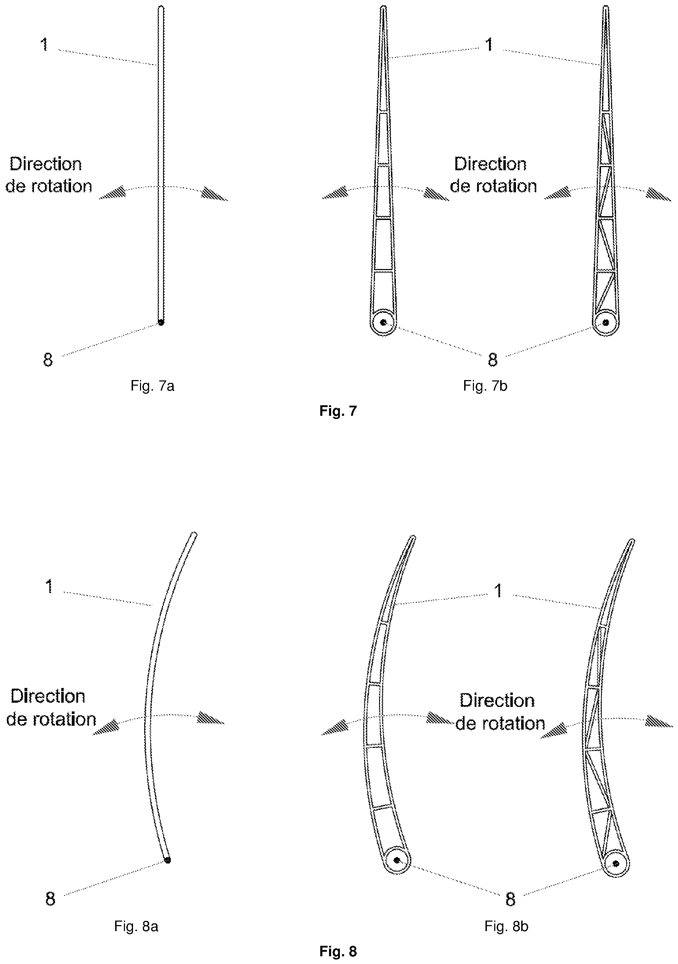

Le système de guidage de fluide (**1**) peut être constitué de parois plates (Fig. 2, Fig. 4, Fig. 6a, Fig. 7) ou de parois courbées (Fig. 3, Fig. 5, Fig. 6b, Fig. 8). Le système de guidage de fluide peut être équipé d'un système de rotation au tour de son propre axe (**8**) (Fig. 2, Fig. 3, Fig. 7 et Fig. 8) en parallèle à l'axe de rotation du rotor (**3**). Les guidages de fluide peuvent se composer d'une structure régulière (Fig. 7a et Fig. 8a) ou d'une structure renforcée (Fig. 7b et Fig. 8b). La structure des pales du rotor est composée de la même manière (structure régulière ou renforcée).

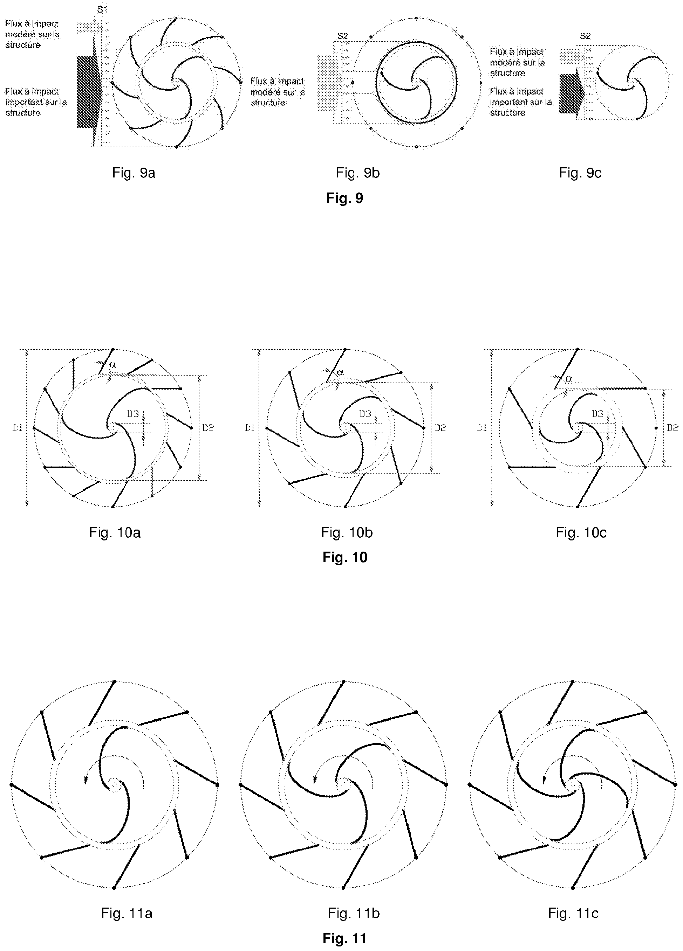

La position des guidages de fluide est en fonction de la vitesse du rotor et des fluides éventuellement. En cas de flux agressifs ou de vitesse de rotor excessive, les guidages de fluide se referment progressivement jusqu'en position d'arrêt de sécurité (Fig. 2b, Fig. 3b, Fig. 4b et Fig. 5b). En position d'arrêt de sécurité, les guidages de fluide forment un cylindre, un pseudo-cylindre ou un tube polygonal qui permet d'alléger les impacts des flux excessifs sur la structure de l'éolienne / hydrolienne, car les flux des fluides contourneront autour des guidages au lieu d'impacter sur une grande surface de celle-ci (Fig. 9).

Les éoliennes / hydroliennes de la présente invention sont caractérisées par des paramètres clés illustrés dans les figures Fig. 4, 5 et 6, et présentés ci-dessous:
- D1 : Le diamètre global extérieur de l'éolienne / hydrolienne qui enveloppe les guidages de fluide et la structure protectrice,
- D2 : Le diamètre du rotor D2 qui enveloppe les pales du rotor,
- D3 : Le diamètre de l'espace de compensation de fluide,
- α : L'angle d'orientation des guidages de fluide. C'est l'angle absolu entre le guidage de fluide en position de fonctionnement et le guidage de fluide en position d'arrêt de sécurité (Fig. 4a, Fig. 5a, Fig. 6a et Fig. 6b)
- La hauteur de l'éolienne / hydrolienne H.

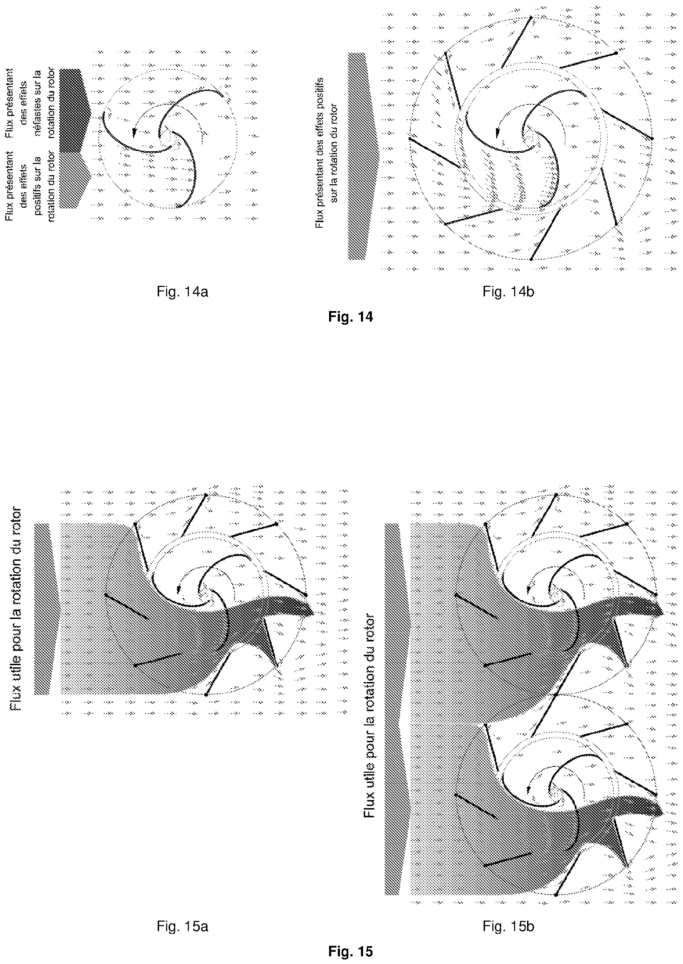

L'angle α d'orientation des guidages de fluide des éoliennes / hydroliennes de la présente invention comprend des valeurs absolues entre 0° et 80° (Fig. 4, Fig. 5 et Fig. 6). En position d'arrêt de sécurité, l'angle α se trouve à la valeur 0°. En état de fonctionnemen t, la valeur optimale de l'angle α comprend des valeurs absolues entre 50° et 70°, avec une valeur de 60° recommandée pour la meilleure efficacité en orientant des flux présentant des effets néfastes sur la rotation du rotor vers l'aube menant et en diminuant significativement la force des flux pressés sur l'aube retour (Fig. 14).

Les éoliennes / hydroliennes de la présente invention possèdent un rapport D1/D2 qui comprend des valeurs entre 1/1 et 4/1. Cela enveloppe les éoliennes / hydroliennes typiques à 12, 8 et 6 guidages de fluide (Fig. 10a, Fig. 10b et Fig. 10c).
Les éoliennes / hydroliennes à rapport D1/D2 élevé comme celles à 6 guidages de fluide sont destinées aux emplacements où les flux sont à faible vélocité, tandis que les éoliennes / hydroliennes à faible rapport D1/D2 comme celles à 12 guidages de fluides sont plus adaptées aux endroits où la vélocité des flux (des vents ou des courants d'eau) est élevée.

La hauteur de l'éolienne / hydrolienne H est variable en fonction de l'application et l'emplacement des installations.

Le rotor des éoliennes / hydroliennes de la présente invention est composé au moins deux pales disposées de façon régulière et placées à l'intérieur du système de guidage de fluide (Fig. 11).

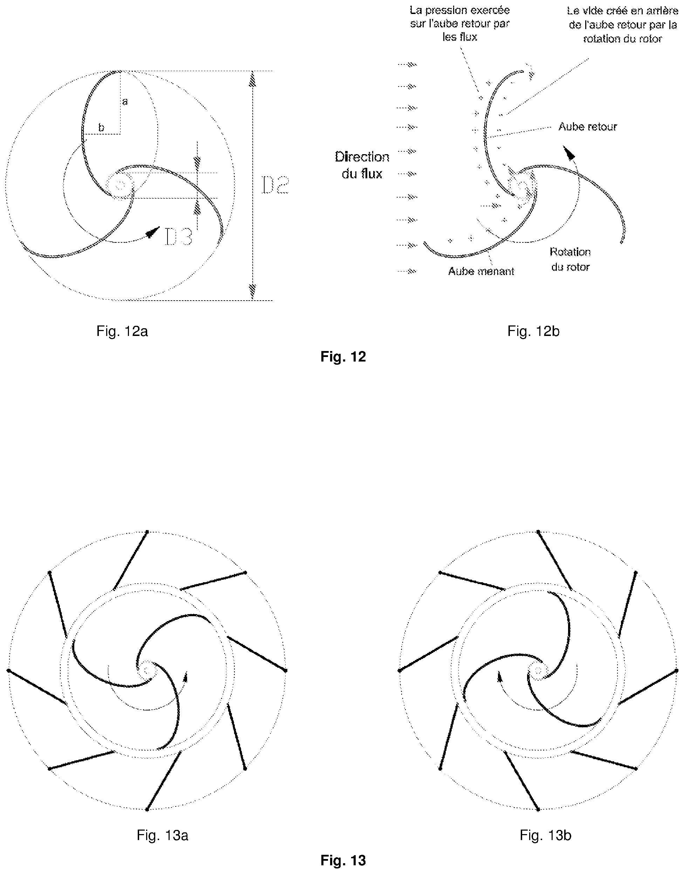

Les pales de la présente invention sont conçues en forme elliptique (Fig. 12). Elles peuvent être sous forme des ailes courbées de type ordinaire qui s'étendent en parallèle à l'axe de rotation (3) du rotor ou de type hélicoïdal qui sont vrillés hélicoïdalement autour de l'axe de rotation (3). La forme des pales est optimisée et dimensionnée par le rapport a/b (Fig. 12a) qui se trouve dans une fourchette entre 1 et 10.

L'espace de compensation de fluide D3 (Fig. 4, Fig. 5, Fig. 6, Fig. 10 et Fig. 12) permet à une partie de fluide de passer de l'aube menant à l'arrière de l'aube retour. Cela permet de compenser le vide en arrière de l'aube retour créé par des mouvements des pales (Fig. 12b), donc d'améliorer le rendement ou l'efficacité de l'éolienne / hydrolienne. La figure Fig. 12b démontre clairement la raison de faible rendement des éoliennes/hydroliennes sans guidages de fluide.
Le rotor de la présente invention possède un rapport D3/D2 qui comprend des valeurs entre 1/2 et 1/20.

Le sens de rotation du rotor dudit dispositif (éolienne/hydrolienne de la présente invention) est constant trigonométrique ou anti-trigonométrique quelle que soit la direction des flux. Le sens de rotation du rotor est en fonction de l'architecture des pales et des guidages de fluide. Deux types dudit dispositif sont proposés : le dispositif (éolienne/hydrolienne) à rotor trigonométrique (Fig. 13a) et le dispositif (éolienne/hydrolienne) à rotor anti-trigonométrique (Fig. 13b). Ces types dudit dispositif peuvent créer des rendements différents dans certains emplacements spécifiques où la vélocité des fluides varie en espace. Donc, le choix du type dudit dispositif proviendra d'une étude préalable spécifique pour chaque emplacement sur le terrain.

Le design des guidages de fluide de la présente invention (Fig. 14) permet de convertir des flux présentant des effets néfastes sur la rotation du rotor en flux utiles ou présentant des effets positifs sur la rotation du rotor, en les orienter vers l'aube menant et en diminuant significativement la force des flux pressée sur l'aube retour (Fig. 12).

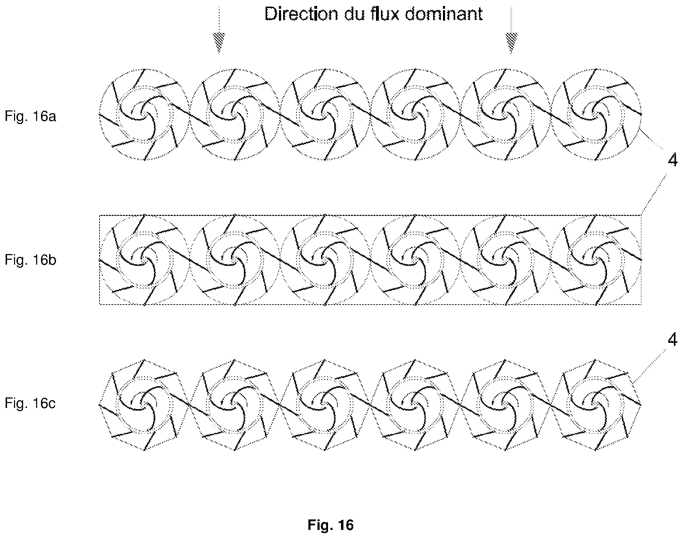

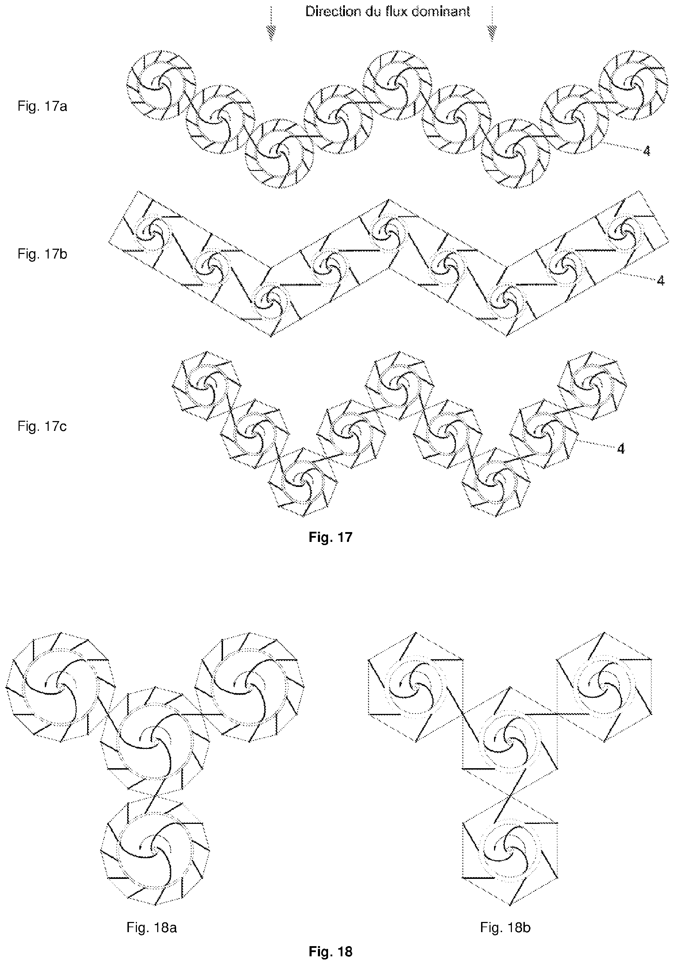

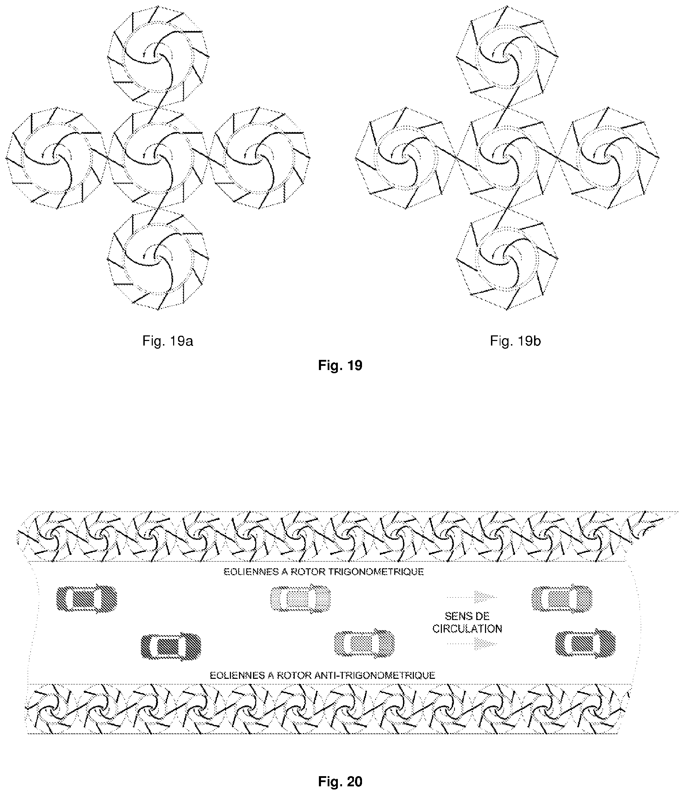

L'architecture des guidages de fluide, des pales du rotor et les modes de rassemblement desdits dispositifs (éoliennes/hydroliennes de la présente invention) sont primordiaux pour leur efficacité. La Fig. 15 démontre clairement l'avantage d'un rassemblement des deux dispositifs par rapport à un dispositif isolé.
En position de fonctionnement, si les guidages adjacents de deux lesdits dispositifs rassemblés forment une paroi continue, la quasi-totalité des flux peuvent devenir bénéfique pour la rotation du rotor, car les guidages de fluide de deux lesdits dispositifs adjacents orientent et favorisent conjointement l'écoulement d'ensemble des fluides vers les aubes menant. Donc, le rassemblement des éoliennes/hydroliennes de la présente invention selon les modes de rassemblement spécifiques permettra d'améliorer significativement le rendement des éoliennes / hydroliennes verticales.
En réunissant lesdits dispositifs sur une ligne droite perpendiculaire à la direction des flux dominants, lesdits dispositifs créeront un mur face aux flux et récupèreront la quasi-totalité des flux pour faire tourner le rotor (Fig. 16). Les modes de rassemblement desdits dispositifs en forme zigzag (Fig. 17), en forme Y (Fig. 18) et en forme étoile (Fig. 19) sont aussi très bénéfiques pour les emplacements où la direction des flux est variable. Ces architectures permettent aussi de renforcer la stabilité globale de la structure du groupe desdits dispositifs.

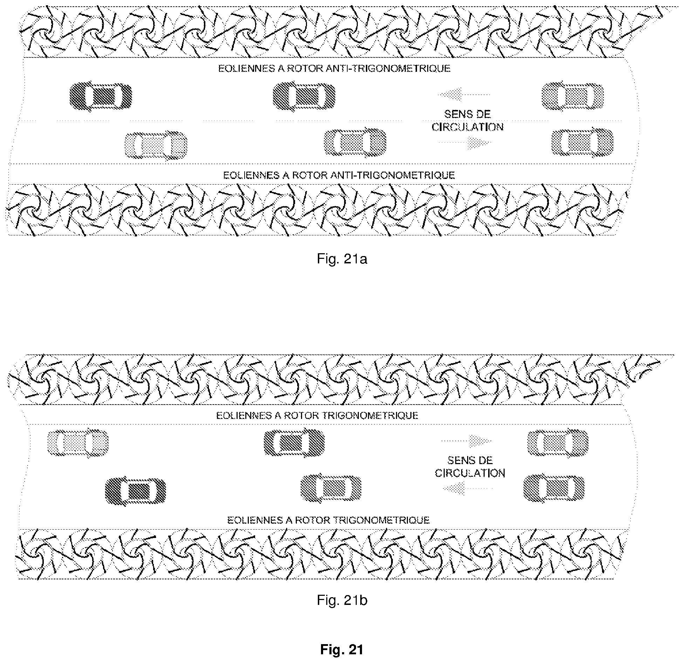

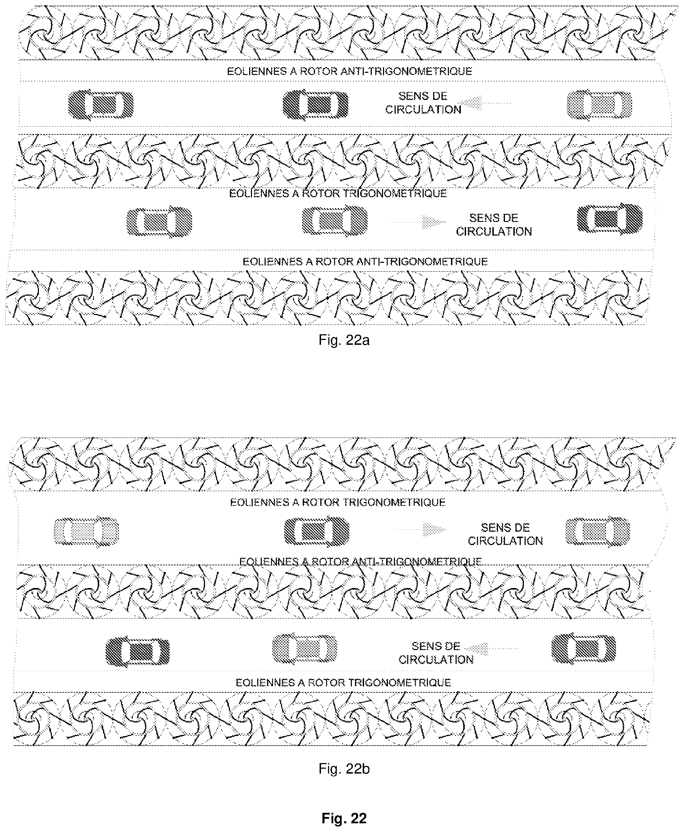

Au bord des réseaux de transport routiers et ferroviaires (des routes, des réseaux ferrés, etc.), les éoliennes de la présente invention sont rassemblées en rangées rectilignes ou courbées en parallèle au réseau de transport. Ces lesdits dispositifs joueront aussi le rôle de systèmes de recharge électrique sans contact le long des réseaux de transport.
Nos résultats de recherche ont confirmé que le sens de circulation et le type desdits dispositifs (à rotor trigonométrique ou à rotor anti-trigonométrique) présentent une influence importante sur la productivité des éoliennes de la présente invention. Afin d'avoir le meilleur rendement des éoliennes de la présente invention :
- Au bord des réseaux de transport routiers et ferroviaires (des routes, des réseaux ferrés, etc.) de circulation à sens unique, les éoliennes à rotor anti-trigonométrique doivent être installées du côté droit, tandis que les éoliennes à rotor trigonométrique doivent être installées du côté gauche comme illustré dans la Fig. 20.
- Au bord des réseaux de transport routiers et ferroviaires (des routes, des réseaux ferrés, etc.) de circulation à deux sens, les éoliennes à rotor anti-trigonométrique doivent être installées de deux côtés des réseaux de transport de circulation à droit (Fig. 21a, Fig. 22a), tandis que et les éoliennes à rotor trigonométrique doivent être installées de deux côtés des réseaux de transport de circulation à gauche (Fig. 21b, Fig. 22b).
- Les éoliennes à rotor trigonométrique doivent être installées sur le terre-plein central des réseaux de transport routiers et ferroviaires (des routes, des réseaux ferrés, etc.) de circulation à droit (Fig. 22a), tandis que les éoliennes à rotor anti-trigonométrique doivent être installées sur le terre-plein central des réseaux de transport routiers et ferroviaires (des routes, des réseaux ferrés, etc.) de circulation à gauche (Fig. 22b).

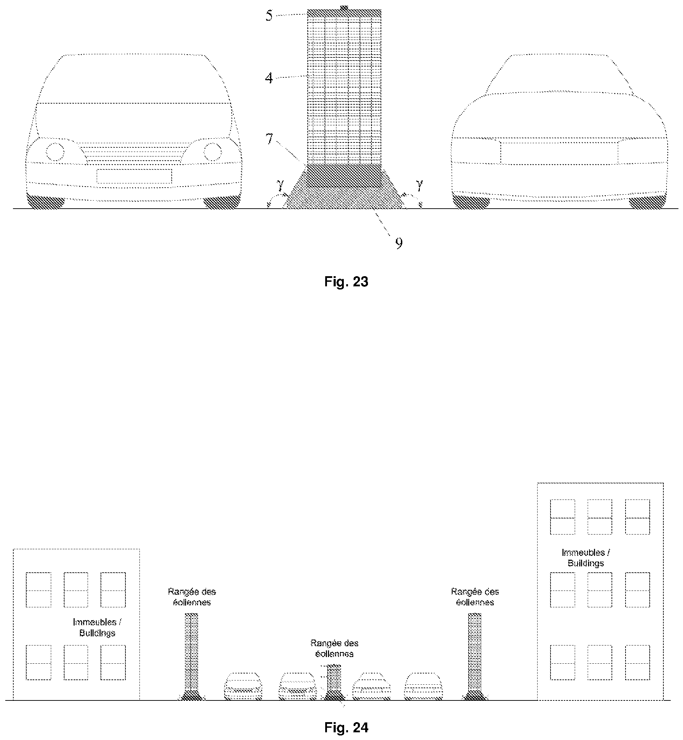

L'architecture du socle des éoliennes/hydroliennes de la présente invention présente aussi l'influence sur leur rendement. L'angle γ entre la chaussée ou le fond des rivières et la surface ou la façade extérieure du socle des éoliennes devrait être supérieur à 90° (Fig. 23) pour obtenir un meilleur rendement.

L'architecture des éoliennes de la présente invention permet de briser les ondes sonores et les lumières. Donc, les rangées desdits dispositifs joueront aussi le rôle des murs anti-bruit et des barrières de sécurité au bord et au milieu sur le terre-plein central des réseaux de transport routiers et ferroviaires (des routes, des réseaux ferrés, etc.) (Fig. 23, Fig. 24), sur les balcons, sur les terrasses des immeubles, etc.

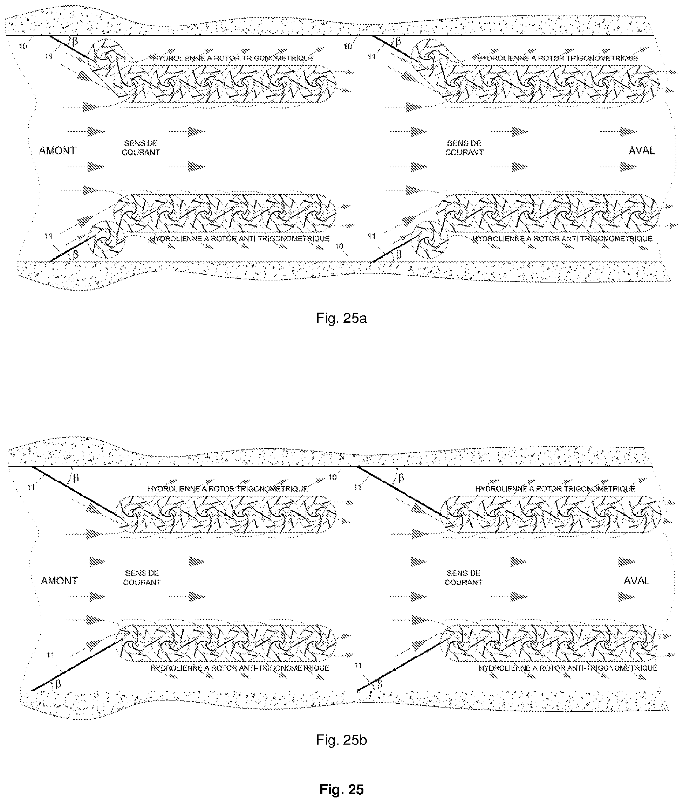

Dans les cours d'eau, dans les rivières ou dans les fleuves, les hydroliennes de la présente invention seront immergées dans l'eau, rassemblées et installées en parallèle au bord de la rivière et sur la ligne de réduction de courant (Fig. 25). Lesdites hydroliennes joueront aussi le rôle des systèmes de recharge électrique sans contact le long des réseaux de transport fluviaux (des rivières et des fleuves, etc.). Ces groupes desdites hydroliennes seront espacés périodiquement pour régénérer la vélocité du cours d'eau. Une murette de réduction de courant sera placée en amont de chaque groupe desdites hydroliennes et inclinée par rapport au bord de la rivière un angle β (angle de réduction de courant) qui prendra la valeur entre 10°et 80° selon l'emplacement.
Afin d'obtenir le meilleur rendement, lesdites hydroliennes à rotor anti-trigonométrique doivent être installées du côté de la rive droite, tandis que lesdites hydroliennes à rotor trigonométrique doivent être installées du côté de la rive gauche. Ces installations permettront d'éviter la construction des barrages hydrauliques dans les rivières.

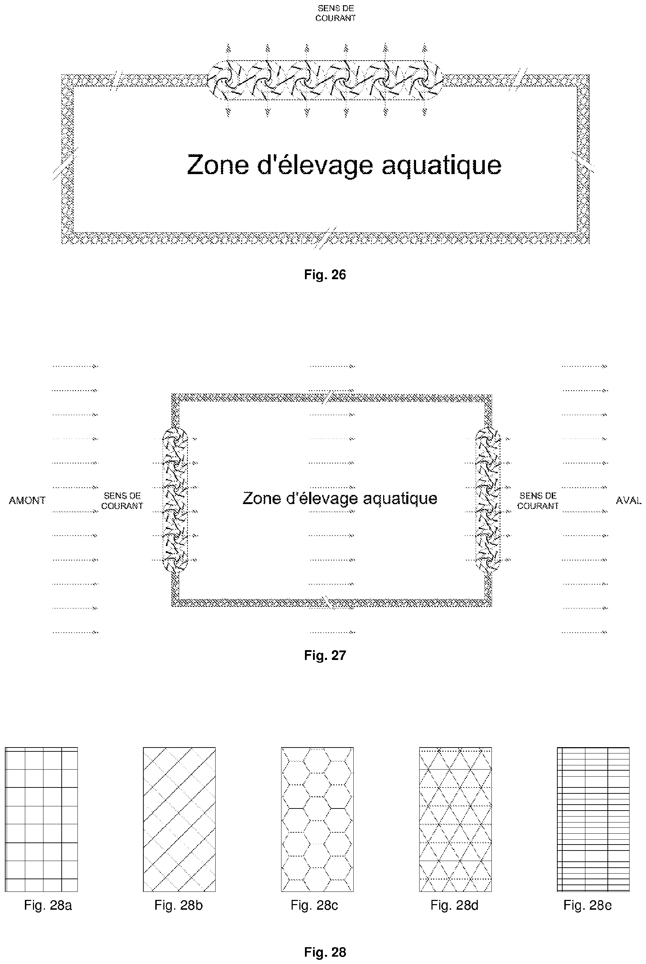

Les hydroliennes de la présente invention peuvent être installées dans les zones côtières, à l'entrée des zones de vidange et de remplissage des bassins ou à chaque l'ouverture des zones d'élevage aquatique. Lesdites hydroliennes peuvent être rassemblées en rangée à chaque l'ouverture des zones d'élevage aquatique (Fig. 26, Fig. 27) et des zones de vidange et de remplissage des bassins. Dans les larges zones côtières où la direction des courants maritimes et des vagues est variable, les hydroliennes seront rassemblées en forme zigzag pour mieux capter l'énergie des courants marins et des vagues.

De nombreux designs de la structure protectrice (**4**) des éoliennes / hydroliennes de la présente invention sont proposés et illustrés dans les figures Fig. 1, Fig. 16, Fig. 17 et Fig. 28. La structure protectrice peut être sous forme en maillage carré (Fig. 28a), en maillage losangé (Fig. 28b), en maillage hexagonal (Fig. 28c), en maillage triangulaire (Fig. 28d), en maillage rectangulaire (Fig. 28e). En rangée desdites dispositifs, la structure protectrice peut être sous forme de cylindres individuels (Fig. 16a, Fig. 17a), de murs plats (Fig. 16b, Fig. 17b) et de tubes polygonaux (Fig. 16c, Fig. 17c). Cela améliore leur esthétique et leur sécurité pour les enfants, les oiseaux, les animaux, les poissons, etc. Donc leurs impacts environnementaux seront très réduits. Ladite structure protectrice (**4**) peut être fabriquée de différentes matières, telles que de matériaux naturels, de matériaux de synthèse, des métaux, d'alliages, de plastiques, de fibres ou de tissus, etc.

Le dispositif de la présente invention est destiné aux entreprises ou organismes producteurs d'électricité et aux particuliers souhaitant produire de l'électricité de petite échelle à grande échelle. La présente invention faisant partie des technologies durables offre une petite contribution pour le développement des sources d'énergie renouvelables, pour la période de post ère d'énergie fossile.

## Revendications

1. Un mur ou une structure de forme rectiligne ou en forme de zigzag ou en forme de croix ou en forme de Y ou en forme d'étoile, composé(e) de dispositifs éoliens / hydroliens transformant en énergie mécanique et en énergie électrique, l'énergie engendrée par différents types de flux ; lesdits dispositifs étant composés d'un système de guidage de fluide (**1**), d'un rotor (**3**), d'une structure protectrice (**4**), d'un cadre structurant (**6**), d'un caisson sommet (**5**) et d'un caisson bas (**7**) ;
• le système de guidage de fluide (**1**) permettant de collecter plus de flux, d'orienter les flux ayant des effets négatifs sur la rotation du rotor en flux ayant les effets positifs sur la rotation du rotor, d'élargir les conditions opératoires dudit dispositif à une vitesse ou vélocité des flux plus faible et plus forte, donc d'augmenter la période de fonctionnement effectif dudit dispositif, le système de guidage de fluide (**1**) étant disposé de façon régulière autour du rotor ; en position d'arrêt de sécurité, des guidages de fluide enveloppant complètement le rotor, les guidages de fluide étant constitués de parois plates ou de parois courbées, chaque guidage de fluide (**1**) étant équipé d'un système de rotation autour de son propre axe (**8**) en parallèle à l'axe de rotation du rotor (**3**) ; les guidages de fluide (**1**) constituant une structure régulière ou une structure renforcée ; la position des guidages de fluide (**1**) étant fonction de la vitesse du rotor et des fluides ; en cas de flux agressifs ou de vitesse de rotor excessive, les guidages de fluide se refermant progressivement jusqu'en position d'arrêt de sécurité en forme d'un cylindre, ou d'un pseudo-cylindre ou d'un tube polygonal qui permet d'alléger les impacts des flux excessifs sur la structure dudit dispositif ; l'angle α d'orientation qui est l'angle absolu entre le guidage de fluide en position de fonctionnement et le guidage de fluide en position d'arrêt de sécurité, prenant des valeurs absolues entre 0° et 80° : en position d'arrêt de sécurité, l'angle α se trouvant à la valeur 0° , en état de fonctionnement, la valeur optimale de l'angle α prenant des valeurs absolues entre 50° et 70°, avec une valeur de 60° recommandée pour la meilleure efficacité en orientant des flux présentant des effets néfastes sur la rotation du rotor vers une aube menant et en diminuant significativement la force des flux pressés sur une aube retour ; en position de fonctionnement, les guidages de fluide (**1**) des rotors adjacents forment une paroi continue pour orienter et favoriser conjointement l'écoulement de l'ensemble des fluides vers les aubes menant.
• le rotor (**3**) étant constitué des pales / aubes (**2**) disposées de façon régulière et situées à l'intérieur du système de guidage de fluide (**1**), le rapport D1/D2 entre le diamètre extérieur D1 du dispositif et le diamètre D2 du rotor prenant des valeurs entre 1/1 et 4/1, cela englobant les dispositifs éoliens / hydroliens typiques à 12, 8 et 6 guidages de fluide ; lesdits dispositifs à rapport D1/D2 de 4/1 comme éolienne/hydrolienne à 6 guidages de fluide étant destinés aux emplacements où les flux sont à faible vélocité, tandis que lesdits dispositifs à rapport D1/D2 proche de 1/1 comme éolienne/hydrolienne à 12 guidages de fluide étant plus adaptés aux endroits où la vélocité des flux est élevée ;
• la structure protectrice (**4**) étant disposée à l'extérieur du système de guidage de fluide (**1**) pour assurer la sécurité vis-à-vis des enfants, des oiseaux, des animaux et des poissons ;
• le cadre structurant (**6**) étant disposé autour et à l'extrémité dudit dispositif ;
• le caisson sommet (**5**) et le caisson bas (**7**) étant disposés au-dessus et au-dessous des guidages de fluide et du rotor, lesdits caissons pouvant contenir un système de transmission mécanique, un multiplicateur, un générateur électrique, un système de freinage, un onduleur, des sorties électriques, un système de rotation des guidages de fluide, un système de contrôle et de régulation, un système de sécurité, un système de refroidissement, un système de lévitation magnétique, un système de recharge électrique sans contact, un lot de batteries et un système de fixation dudit dispositif.

2. Mur ou structure selon la revendication 1, caractérisé(e) en ce que les pales (**2**) sont composées d'une structure régulière ou renforcée, conçues en forme elliptique de type ordinaire qui s'étendent en parallèle à l'axe de rotation du rotor (**3**) ou de type hélicoïdal qui sont vrillées hélicoïdalement autour de l'axe de rotation du rotor (**3**), la forme des pales étant **caractérisée par** le rapport a/b se trouvant dans une fourchette entre 1 et 10, où a est le demi-grand axe de l'ellipse et b est le demi-petit axe de l'ellipse ; l'espace de compensation D3 du fluide permettant à une partie du fluide de passer de l'aube menant à l'arrière de l'aube retour afin de compenser le vide en arrière de l'aube retour créé par des mouvements des pales, donc d'améliorer le rendement ou l'efficacité dudit dispositif ; le rapport optimal D3/D2 entre le diamètre de l'espace de compensation D3 de fluide et le diamètre D2 du rotor prenant des valeurs entre 1/2 et 1/20.

3. Mur ou structure selon l'une des revendications 1 à 2, caractérisé(e) en ce que le sens de rotation des rotors est identique, trigonométrique ou anti-trigonométrique, quelle que soit la direction des flux ; le sens de rotation des rotors étant fonction de l'architecture des pales et des guidages de fluide ; les dispositifs pouvant être à rotor trigonométrique ou à rotor anti-trigonométrique.

4. Mur ou structure selon l'une des revendications 1 à 3, caractérisé(e) en ce que l'architecture de la structure protectrice (**4**) enveloppant ledit dispositif dépend de l'utilisation du dispositif, et est sous forme d'un maillage carré ou d'un maillage losangé ou d'un maillage hexagonal ou d'un maillage triangulaire ou d'un maillage rectangulaire, la structure protectrice (**4**) pouvant être sous forme de cylindres individuels, ou de murs plats ou de tubes polygonaux, et assurant la sécurité des enfants, des oiseaux, des animaux et des poissons tout en laissant passer les flux de fluide, cette structure protectrice pouvant être fabriquée de différentes matières, telles que des matériaux naturels, des matériaux de synthèse, des métaux, d'alliages, de plastiques, de fibres ou de tissus.

5. Utilisation du mur ou de la structure selon l'une des revendications 1 à 4, **caractérisée en ce que** :
• au bord des réseaux de transport routiers et ferroviaires, lesdits dispositifs sont rassemblés en rangées rectilignes en parallèle au réseau de transport, lesdits dispositifs jouant aussi le rôle de systèmes de recharge électrique sans contact le long des réseaux de transport ;
• au bord des réseaux de transport de circulation à sens unique, lesdits dispositifs à rotor anti-trigonométrique sont installés du côté droit, tandis que lesdits dispositifs à rotor trigonométrique sont installés du côté gauche ;
• au bord des réseaux de transport de circulation à deux sens, lesdits dispositifs à rotor anti-trigonométrique sont installés de deux côtés des réseaux de transport de circulation à droite, tandis que lesdits dispositifs à rotor trigonométrique sont installés de deux côtés des réseaux de transport de circulation à gauche ;
• lesdits dispositifs à rotor trigonométrique sont installés sur un terre-plein central des réseaux de transport de circulation à droite, tandis que lesdits dispositifs à rotor anti-trigonométrique sont installés sur le terre-plein central des réseaux de transport de circulation à gauche ;
• l'angle γ entre la chaussée ou le fond des rivières et la façade ou la surface extérieure du socle dudit dispositif est supérieur à 90° pour obtenir un meilleur rendement.

6. Utilisation du mur ou de la structure selon l'une des revendications 1 à 4, **caractérisée en ce que** la version éolienne dudit mur ou de ladite structure est conçue et optimisée pour s'adapter à tout environnement où le vent peut être présent, en onshore et offshore comme au bord des autoroutes, des routes, des réseaux ferrés, dans les tunnels, dans les champs, sur les collines, sur les immeubles, en toiture, sur les balcons, sur les terrasses ou au bord des rivières, au bord de la mer, dans les parcs d'éoliennes offshores à la mer ; ledit mur ou ladite structure jouant aussi le rôle de mur anti-bruit et de barrière de sécurité avec une capacité de briser les ondes sonores et lumineuses au bord et au milieu sur le terre-plein central des réseaux de transport routiers et ferroviaires, sur les terrasses, sur les balcons et sur les immeubles.

7. Utilisation du mur ou de la structure selon l'une des revendications 1 à 4, **caractérisée en ce que** dans les cours d'eau, dans les rivières ou dans les fleuves, lesdits dispositifs sont immergés dans l'eau, sont installés le long des rivières et sur une ligne de réduction de courant ; lesdits dispositifs installés le long des rivières jouant aussi le rôle de murs de sécurité protégeant les digues contre les érosions causées par des courants d'eaux et des vagues, et le rôle de système de recharge électrique sans contact le long des réseaux de transport fluviaux ; des groupes desdits dispositifs étant espacés périodiquement pour régénérer la vélocité du cours d'eau ; une murette de réduction de courant étant placée en amont de chaque groupe desdits dispositifs et inclinée par rapport au bord de la rivière d'un angle β qui est l'angle de réduction de courant et qui prend une valeur entre 10° et 80° selon l'emplacement ; lesdits dispositifs à rotor anti-trigonométrique devant être installés du côté de la rive droite, tandis que les dispositifs à rotor trigonométrique devant être installés du côté de la rive gauche.

8. Utilisation du mur ou de la structure selon la revendication 7, **caractérisée en ce que** lesdits dispositifs sont installés dans les zones côtières, à l'entrée des zones de vidange et de remplissage des bassins ou à chaque ouverture des zones d'élevage aquatique ; lesdits dispositifs étant rassemblés en rangée rectiligne à chaque ouverture des zones d'élevage aquatique et des zones de vidange et de remplissage des bassins ; dans les larges zones côtières où la direction des courants marins et des vagues est variable, lesdits dispositifs étant rassemblés en forme de zigzag pour mieux capter l'énergie des courants marins et des vagues ; les rangées desdits dispositifs installés le long des zones côtières jouant aussi le rôle de murs anti-vagues protégeant les digues contre les érosions causées par des courants d'eaux et des vagues.

## Patentansprüche

1. Eine Wand oder Struktur in geradliniger Form oder zickzackförmig, kreuzförmig, y-förmig oder sternförmig, bestehend aus Windkraft-/Gezeitenkraftvorrichtungen, die durch verschiedene Arten von Strömungen erzeugte Energie in mechanische und elektrische Energie umwandeln; diese Vorrichtungen bestehen aus einem Fluidleitsystem (**1**), einem Rotor (**3**), einer Schutzstruktur (**4**), einem Strukturrahmen (**6**), einem oberen (**5**) und einem unteren Kasten (**7**);
• das Fluidleitsystem (**1**) ermöglicht es, mehr Strömung zu erfassen, die Strömungen 10 mit negativen Auswirkungen auf die Rotordrehung in Strömungen mit positiven Auswirkungen auf die Rotordrehung zu orientieren, und die Betriebsbedingungen der Vorrichtung auf eine mehr oder weniger starke Strömungsgeschwindigkeit oder Schnelligkeit abzustellen, und somit die effektive Betriebsdauer der Vorrichtung zu verbessern, da das Fluidleitsystem (**1**) gleichmäßig um den Rotor angeordnet ist; in 15 der Sicherheitsstopp-Position umgeben die Fluidleitungen den Rotor vollständig, da die Fluidleitungen aus flachen oder gebogenen Wänden bestehen und jede Fluidleitung (**1**) mit einem Rotationssystem um die eigene Achse (**8**) parallel zur Drehachse des Rotors (**3**) versehen ist; die Fluidleitungen (**1**) bilden eine regelmäßige oder verstärkte Struktur; die Position der Fluidleitungen (**1**) hängt von 20 der Drehzahl des Rotors und der Flüssigkeiten ab; bei aggressiven Strömungen oder zu hoher Rotordrehzahl schließen sich die Fluidleitungen allmählich bis zur Sicherheitsstoppposition in Form eines Zylinders oder eines Pseudozylinders oder eines polygonalen Rohrs, womit die Auswirkungen übermäßiger Strömungen auf die Struktur der Vorrichtung verringert wird; der Ausrichtungswinkel α ist der absolute 25 Winkel zwischen der Fluidleitung in Betriebsposition und der Fluidleitung in Sicherheitsstoppposition, mit absoluten Werten zwischen 0° und 80°: in der Sicherheitsstoppposition liegt der Winkel α bei 0°, im Betriebszustand liegen die optimalen Werte des Winkels α bei Absolutwerten zwischen 50° und 70°, wobei ein Wert von 60° für die beste Wirkung empfohlen wird, um die Strömungen mit 30 nachteiligen Auswirkungen auf die Rotordrehung in Richtung auf eine Antriebsschaufel abzuleiten und die Kraft der auf die Rücklaufschaufel gepressten Strömungen erheblich zu verringern; in der Betriebsposition bilden die Fluidleitungen (**1**) der nebeneinander liegenden Rotoren eine durchgehende Wand, um gemeinsam den Abfluss aller Fluide zu den Antriebsschaufeln hin zu orientieren und zu fördern.
• der Rotor (**3**) besteht aus gleichmäßig innerhalb des Fluidleitungssystems (**1**) angeordneten Blättern / Schaufeln (**2**), wobei das Verhältnis D1 / D2 zwischen dem Außendurchmesser D1 der Vorrichtung und dem Durchmesser D2 des Rotors Werte zwischen 1/1 und 4/1 annimmt, was die typischen Windkraftanlagen / Gezeitenkraftanlagen mit 12, 8 und 6 Fluidleitungen umfasst; besagte Geräte mit einem Verhältnis D1 / D2 von 4/1 als Windkraft-/Gezeitenkraftanlagen mit 6 Fluidleitungen sind für Standorte mit geringer Strömungsgeschwindigkeit vorgesehen, während die Vorrichtungen mit einem Verhältnis D1 / D2 nahe 1/1 als Windkraft-/Gezeitenkraftanlage mit 12 Fluidleitungen besser an Standorte mit hoher Strömungsgeschwindigkeit angepasst sind;
• die Schutzstruktur (**4**) ist außerhalb des Fluidleitungssystems (**1**) angebracht, um die Sicherheit von Kindern, Vögeln, Tieren und Fischen zu gewährleisten;
• der Strukturrahmen (**6**) ist um die Vorrichtung herum und an deren Extremität angeordnet;
• der obere (**5**) und der untere Kasten (**7**) sind jeweils oberhalb und unterhalb der Fluidleitungen und des Rotors angeordnet, wobei die Kästen ein mechanisches Übertragungssystem enthalten können sowie einen Multiplikator, einen elektrischen Generator, ein Bremssystem, einen Wechselrichter, elektrische Ausgänge, ein Rotationssystem der Fluidleitungen, ein Steuerungs- und Regelsystem, ein Sicherheitssystem, ein Kühlsystem, ein Magnetschwebesystem, ein kontaktloses elektrisches Ladesystem, ein Batteriepack und ein Befestigungssystem für die Vorrichtung.

2. Wand oder Struktur nach Anspruch 1, **dadurch gekennzeichnet, dass** die Blätter (**2**) aus einer regelmäßigen oder verstärkten Struktur bestehen, die in üblicher elliptischer Form ausgeführt ist und parallel zur Rotordrehachse liegt (**3**), oder eine Struktur des spiralförmigen Typs, die in einer Spirale um die Rotordrehachse gedreht ist (**3**); die Form der Schaufeln ist **dadurch gekennzeichnet ist, dass** das Verhältnis a / b in einem Bereich zwischen 1 und 10 liegt, wobei a die halbe Hauptachse der Ellipse und b die halbe Nebenachse der Ellipse ist; der D3-Kompensationsraum des Fluids, der es ermöglicht, dass ein Teil des Fluids von der Antriebsschaufel zur Rückseite der Rücklaufschaufel gelangt, um so den durch Blattbewegungen erzeugten leeren Raum hinter der Rücklaufschaufel zu kompensieren, so dass die Leistung oder Wirksamkeit der Vorrichtung verbessert wird; das optimale Verhältnis D3 / D2 zwischen dem Durchmesser des Fluidkompensationsraums D3 und dem Rotordurchmesser D2 nimmt Werte zwischen 1/2 und 1/20 an.

3. Wand oder Konstruktion nach einem der Ansprüche 1 bis 2, **dadurch gekennzeichnet, dass** die Drehrichtung der Rotoren unabhängig von der Strömungsrichtung identisch, trigonometrisch oder anti-trigonometrisch ist; die Drehrichtung der Rotoren hängt ab von der Architektur der Schaufeln und den Fluidleitungen; die Vorrichtungen können mit trigonometrischen oder antitrigonometrischen Rotoren ausgestattet sein.

4. Wand oder Struktur nach einem der Ansprüche 1 bis 3, **dadurch gekennzeichnet, dass** die Architektur der die Vorrichtung umgebenden Schutzstruktur (**4**) von der Verwendung der Vorrichtung abhängt und die Form eines Maschennetzes in Quadrat-, Diamant-, Sechseck-, Dreiecks- oder Rechtecksform (**4**) besitzt; die Schutzstruktur (4) kann aus einzelnen Zylindern oder flachen Wänden oder polygonalen Rohren bestehen und gewährleistet die Sicherheit von Kindern, Vögeln, Tieren und Fischen, wobei sie die Fluidströmung durchlässt. Diese Schutzstruktur kann aus verschiedenen Materialien bestehen, aus natürlichen oder synthetischen Materialien, Metallen, Legierungen, Kunststoffen, Fasern oder Geweben.

5. Verwendung der Wand oder Struktur nach einem der Ansprüche 1 bis 4, **dadurch gekennzeichnet, dass** :
• am Rande von Straßen- und Schienenverkehrsnetzen die Vorrichtungen in geraden Reihen parallel zum Verkehrsnetz angeordnet sind, wobei die Vorrichtungen auch die Rolle von kontaktlosen elektrischen Ladesystemen entlang der Verkehrsnetze spielen;
• am Rand der Einweg-Verkehrstransportnetze die anti-trigonometrischen Rotorvorrichtungen auf der rechten Seite installiert sind, während die trigonometrischen Rotorvorrichtungen auf der linken Seite installiert sind;
• am Rand der Zweiwege-Verkehrsnetze die anti-trigonometrischen Rotorvorrichtungen beidseitig rechtsseitig am Verkehrsnetz installiert sind, während die trigonometrischen Rotorvorrichtungen beidseitig am linken Verkehrsnetzwerk installiert sind;
• die trigonometrischen Rotorvorrichtungen im zentralen Mittelstreifen der rechtsseitigen Verkehrsnetze installiert sind, während anti-trigonometrische Rotorvorrichtungen im zentralen Mittelstreifen der linken Verkehrsnetzwerke installiert sind;
• der Winkel γ zwischen der Fahrbahn oder dem Grund der Flüsse und der Fassade oder der Außenfläche des Sockels der Vorrichtung größer als 90° ist, um eine bessere Leistung zu erzielen.

6. Verwendung der Wand oder Struktur nach einem der Ansprüche 1 bis 4, **dadurch gekennzeichnet, dass** die Windkraftversion der Wand oder Struktur so konzipiert und optimiert ist, dass sie sich an jede Umgebung an Land und auf See anpasst, in der Wind vorhanden sein kann, wie z. B. am Rande von Autobahnen, Straßen, Eisenbahnnetzen, in Tunneln, auf Feldern, auf Hügeln, auf Gebäuden, Dächern, Balkons, Terrassen oder an Flussufern, am Meeresufer, in Offshore-Windparks; diese Wand oder Struktur fungiert auch als Schallschutzwand und Sicherheitsbarriere mit der Fähigkeit, Schall- und Lichtwellen am Rand und in der Mitte auf dem zentralen Mittelstreifen des Straßen- und Schienenverkehrsnetzes sowie auf den Terrassen, auf Balkons und Gebäuden zu brechen.

7. Verwendung der Wand oder Struktur nach einem der Ansprüche 1 bis 4, **dadurch gekennzeichnet, dass** in Gewässern, in Flüssen oder in Strömen die Vorrichtungen im Wasser eingetaucht sind und entlang der Flüsse und auf einer Stromreduzierungsleitung installiert sind ; die entlang der Flüsse installierten Vorrichtungen dienen auch als Schutzwände für die Deiche gegen durch Wasserströmungen und Wellen verursachte Erosionen, und spielen die Rolle eines kontaktlosen elektrischen Ladesystems entlang der Flussverkehrsnetze; Gruppen dieser Vorrichtungen sind regelmäßig verteilt, um die Geschwindigkeit des Wasserlaufs zu regenerieren; vor jeder Vorrichtungsgruppe ist eine stromreduzierende Mauer angeordnet, die in einem Winkel β zum Flussrand hin geneigt ist; dieser Winkel der Stromreduzierung beträgt je nach Standort zwischen 10° und 80°, wobei die anti-trigonometrischen Rotorvorrichtungen auf der rechten Uferseite installiert werden sollen, während die trigonometrischen Rotorvorrichtungen auf der linken Uferseite installiert werden sollen.

8. Verwendung der Wand oder Struktur nach Anspruch 7, **dadurch gekennzeichnet, dass** die Vorrichtungen in den Küstenbereichen, am Eingang zu den Bereichen für das Entleeren und Auffüllen der Becken oder an jeder Öffnung der aquatischen Zuchtbereiche installiert sind; diese Vorrichtungen sind in einer geradlinigen Reihe an jeder Öffnung der aquatischen Zuchtbereiche und der Entleerungs- und Auffüllungsbereiche der Becken angeordnet; in großen Küstengebieten, in denen die Richtung der Meeresströmungen und Wellen variabel ist, werden diese Vorrichtungen in Zickzackform angeordnet, um die Energie der Meeresströmungen und der Wellen besser zu erfassen; diese Vorrichtungsreihen entlang der Küste fungieren auch als Wellenschutz, um die Deiche vor durch Wasserströmungen und Wellen verursachte Erosionen zu schützen.

## Claims

1. A straight or zigzag or cross-shaped or Y-shaped or star-shaped wall or structure, composed of wind turbines / water turbines converting the energy from different types of flows into mechanical and electrical energy; aforesaid devices being composed of a fluid guidance system (**1**), a rotor (**3**), a protective structure (**4**), a structuring framework (**6**), a top box (**5**) and a bottom box (**7**);
• the fluid guidance system (**1**) allowing to collect more flows, directing the flows having negative effects on the rotation of the rotor into flows having positive effects on the rotor rotation, extending the operating conditions of aforesaid device to a lower and higher speed or velocity of the flows, thus increasing the effective operating period of aforesaid device, the fluid guidance system (**1**) being arranged regularly around the rotor; in the safety stop position, fluid guides enveloping the rotor completely, the fluid guides consisting of flat walls or curved walls, each fluid guide (**1**) being equipped with a rotation system around its own axis (**8**) in parallel with the axis of rotation of the rotor (**3**); the fluid guidance system (**1**) consisting of a regular structure or a reinforced structure; the position of the fluid guides (**1**) being a function of the speed of the rotor and the fluids; in case of aggressive flows or excessive rotor speed, the fluid guides gradually closing up to the safety stop position in the form of a cylinder, or a pseudo-cylinder or polygonal tube which makes it possible to alleviate the impacts of the excessive flows on the structure of the aforesaid device; the orientation angle α which is the absolute angle between the fluid guide in the operating position and the fluid guide in the safety stop position, taking absolute values between 0° and 80° : in the safety stop position, the angle α being at 0°, in working position, the optimum angle α value taking absolute values between 50° and 70°, with a value of 60° recommended for the best efficiency by directing flows having harmful effects on the rotor rotation towards a leading blade and by decreasing significantly the force of the flows pressed on a return blade ; in operating position, the fluid guides (**1**) of the adjacent rotors form a continuous wall to direct and promote jointly the flow of all fluids to the leading blade.
• the rotor (**3**) being made up of blades / vanes (**2**) arranged regularly and located inside the fluid guiding system (**1**), the ratio D1/D2 between the external diameter D1 of the device and the diameter D2 of the rotor taking values between 1/1 and 4/1, including typical wind turbines / water turbines with 12, 8 and 6 fluid guides ; aforesaid devices with D1/D2 ratio of 4/1 such as wind turbines / water turbines with 6 fluid guides being intended for locations where flows are at low velocity, while aforesaid devices with D1/D2 ratio approaching 1/1 such as wind turbines /water turbines with 12 fluid guides being more adapted to locations where the flow velocity is high ;
• the protective structure (**4**) being arranged outside the fluid guidance system (**1**) to ensure safety with respect to children, birds, animals and fishes;
• the structuring framework (**6**) being arranged around and at the border of aforesaid device;
• the top box (**5**) and the bottom box (**7**) being arranged above and below the fluid guides and the rotor, aforesaid boxes being able to contain a mechanical transmission system, a gearbox, an electrical generator, a braking system, an inverter, electrical outputs, a fluid guides rotation system, a control and regulation system, a safety system, a cooling system, a magnetic levitation system, a wireless electric charging system, a set of batteries and a fixing system of aforesaid device.

2. Wall or structure according to claim 1, **characterized in that** the blades (**2**) are composed of a regular or reinforced structure, designed in an elliptical shape of the ordinary type which extend parallel to the rotation axis of the rotor (**3**) or of the helical type which are helically twisted around the rotation axis of the rotor (**3**), the shape of the blades being **characterized by** the ratio a/b that is in a range between 1 and 10, where a is the half major axis of the ellipse and b is the half minor axis of the ellipse ; the fluid compensation space D3 allowing a part of the fluid to go through from the leading blade to the rear of the return blade in order to compensate for the vacuum behind the return balde created by blade movements, thus improving the efficiency or effectiveness of aforesaid device; the optimum ratio D3/D2 between the diameter of the fluid compensation space D3 and the diameter D2 of the rotor taking values between 1/2 and 1/20.

3. Wall or structure according to claims 1 to 2, **characterized in that** the rotation direction of the rotors is identical, trigonometric or anti-trigonometric, regardless of the direction of the flow; the rotation direction of the rotors being a function of the architecture of the blades and the fluid guides; the devices being able to be trigonometric rotor or anti-trigonometric rotor.

4. Wall or structure according to one of claims 1 to 3, **characterized in that** the architecture of the protective structure (**4**) surrounding aforesaid device depends on the use of the device, and is in the form of square mesh or diamond mesh or hexagonal mesh or triangular mesh or rectangular mesh, the protective structure (**4**) being able to be in the form of individual cylinders, or flat walls or polygonal tubes, and ensuring the safety of children, birds, animals and fish while allowing the fluid flow to go through, this protective structure can be made of different materials, such as natural materials, synthetic materials, metals, alloys, plastics, fibers or fabrics.

5. Use of the wall or structure according to any of claims 1 to 4, **characterized in that**:
• along road and rail transport networks, aforesaid devices are assembled in straight rows in parallel to the transport network, aforesaid devices also acting as contactless electric charging systems along the transport networks;
• along one-way traffic transport networks, aforesaid anti-trigonometric rotor devices are installed on the right side, while aforesaid trigonometric rotor devices are installed on the left side;
• along two-way traffic transport networks, aforesaid anti-trigonometric rotor devices are installed on two sides of the right-hand traffic transport networks, while aforesaid trigonometric rotor devices are installed on two sides of the left-hand traffic transport networks;
• aforesaid trigonometric rotor devices are installed on a central median of the right-hand traffic transport networks, while aforesaid anti-trigonometric rotor devices are installed on the central median of the left-hand traffic transport networks;
• the angle γ between the road surface or river bottom and the façade or outer surface of the base of aforesaid device is greater than 90° to obtain better performance.

6. Use of the wall or structure according to any of claims 1 to 4, **characterized in that** the wind turbine version of aforesaid wall or structure is designed and optimized to adapt to any environment where wind may be present, onshore and offshore such as along highways, roads, railways, in tunnels, on fields, on hills, on buildings, on roofs, on balconies, on terraces or on riversides, seaside, in offshore wind farms; aforesaid wall or structure also acting as a noise barrier and safety barrier with an ability to adsorb / block light and sound waves along the roadside and in the middle on the central median of road and railway transport networks, on terraces, on balconies and on buildings.

7. Use of the wall or structure according to one of claims 1 to 4, **characterized in that** in watercourses, in rivers or in streams, aforesaid devices are immersed in water, are installed along the rivers and on the flow reduction line; aforesaid devices installed along rivers also playing the role of safety walls protecting dams against erosion caused by water flows and waves, and the role of wireless electric recharge system along the waterway transport networks; sets of aforesaid devices being spaced periodically to regenerate the velocity of the water stream; flow reduction wall being placed upstream of each group of aforesaid devices and inclined with respect to the riverside by an angle β which is the flow reduction angle and which takes a value between 10° and 80° depending on the location ; aforesaid anti-trigonometric rotor devices to be installed on the right riverside, while the trigonometric rotor devices to be installed on the left riverside.

8. Use of the wall or structure according to claim 7, **characterized in that** aforesaid devices are installed in the coastal zones, at the entrance of the draining and filling zones of the basins or at each opening of the aquatic breeding zones ; aforesaid devices being assembled in a straight row at each opening of the aquatic breeding zones and the draining and filling zones of the basins ; in large coastal areas where the direction of marine currents and waves is variable, aforesaid devices being assembled in the form of zigzag to better capture the energy of marine currents and waves; the rows of aforesaid devices installed along the coastal areas also acting as anti-wave walls protecting the dykes against erosions caused by water currents and waves.
